# EUROPÄISCHE PATENTANMELDUNG

(11) **EP 3 539 907 A1**
(43) Veröffentlichungstag der Anmeldung: **18.09.2019**
(21) Anmeldenummer: 19162628.2
(22) Anmeldetag: 13.03.2019
(51) Int. Cl.: B65G 19/02, B65G 47/61, B65G 17/48

(54) **VERFAHREN UND VORRICHTUNG ZUM ENTLADEN EINES FÖRDERGUTBEHÄLTERS AN EINER ENTLADESTATION**

(30) Priorität: 13.03.2018 DE 102018105795
(71) Anmelder: Herzog-Lang, Viktor, 75210 Keltern (DE)
(72) Erfinder: Herzog-Lang, Viktor, 75210 Keltern (DE)
(74) Vertreter: RPK Patentanwälte Reinhardt, Pohlmann und Kaufmann Partnerschaft mbB

(57) **Zusammenfassung**

Die Erfindung betrifft ein Verfahren zum Entladen eines auf einem biegeschlaffen Material (9) eines Fördergutbehälters (1) aufgenommenen Förderguts (3) mittels einer Entladestation (5) eines Hängefördersystems (7).

Um ein möglichst Ressourcen effizientes Hängefördersystem zu ermöglichen, hat das Verfahren die Schritte
- Bereitstellen der Entladestation (5),
- Aneinander annähern des Fördergutbehälters (1) und der Entladestation (5),
- Koppeln des biegeschlaffen Materials (9) des Fördergutbehälters (1) mit der Entladestation (5),
- Neigen des gekoppelten biegeschlaffen Materials (9),
- Auswerfen des Förderguts (3) aus dem Fördergutbehälter (1) in einer Gleitbewegung.

## Beschreibung

### Gebiet der Erfindung

Die Erfindung betrifft einen Verfahren zum Entladen eines auf einem biegeschlaffen Material eines Fördergutbehälters aufgenommenen Förderguts mittels einer Entladestation eines Hängefördersystems sowie einen verfahrensgemäßen Fördergutbehälter, Entladestation und Hängefördersystem.

### Stand der Technik

In automatisierten Warenlagern, Produktionsstätten und beim Warentransport wie zum Beispiel im Versandhandel ist es erforderlich, Fördergut möglichst automatisiert in Fördergutbehältern aufzunehmen und aus diesen wieder auszuladen. In diesen Fördergutbehältern können die Waren vor ihrer Auslieferung gelagert werden und gelangen so an die Station, in der sie für den Weitertransport zum Kunden verpackt werden. Der Transport innerhalb der Lager erfolgt üblicherweise über Hängefördereinrichtungen. Die Fördergutbehälter sind dabei meist Taschen, die wie Stoffbeutel gefertigt sind und oben mit einer Art Drahtbügel in ein Schienensystem eingehängt sind. Ein derartiger Fördergutbehälter ist z.B. aus der WO 2014/012965 A1 bekannt. Über ein Gestänge werden dessen Seitenwandelemente so angesteuert, dass die über einen Verbindungsbereich miteinander verbundenen Seitenwandelemente aufgeklappt werden können. Im Bereich einer Beladestation werden die Behälter zudem in eine horizontale oder geneigte Stellung überführt.

Vergleichbare Fördergutbehälter und zugehörige Hängefördereinrichtungen sind beispielsweise aus der DE 10 2004 018 569 A1, EP 2 130 968 A1 oder EP 2 196 415 A bekannt. Die dort beschriebenen Transporttaschen bestehen aus flexiblen Materialien in Form einer Schlaufe, in der das Fördergut gehalten wird. Zum Beladen werden diese Transporttaschen von oben geöffnet, um das Fördergut in die Schlaufe einbringen zu können. Ein Entladen erfolgt dadurch, dass das Fördergut entweder seitlich aus der Schlaufe entnommen oder ausgestoßen wird oder z.B. gemäß der EP 2 130 968 A1 die Schlaufe nach unten geöffnet wird. Ferner ist aus der DE 103 54 419 A1 ein Fördergutträger bekannt, der eine relativ steife und flache Kunststoffwand mit einem Ausschnitt zum Be- und Entladen mit Fördergut aufweist.

Andere Fördergutbehälter sind gefertigt wie hängende flache Wannen aus Kunststoff, die einseitig mit elastischen Stoffen bezogen sind, was das Fördergut einklemmt.

Es ist bekannt, solche Fördergutbehälter mechanisiert zu beladen und manuell wieder zu entladen. Ein Transporttakt richtet sich nach dem langsamsten Vorgang, der auch von der Menge an transportiertem Fördergut abhängt. Insbesondere eine hohe Anzahl an einzelnen Fördergütern kann das Be- und/oder Entladen verlangsamen. Beispielsweise können das Entladen und/oder das Zusammenfügen zerlegter Transportbehälter den maximal möglichen Transporttakt bestimmen. Die EP 2 686 258 B1 betrifft ein Hängefördersystem mit einer Transporttasche zur automatischen Entladung eines geladenen Stückguts und mit einer Entladestation. Die Transporttasche weist einen horizontalen Boden auf, auf dem das Stückgut für Transportzwecke gelagert werden kann. Der Boden wirkt mit einer Hubeinrichtung zusammen, die eingerichtet ist, den Boden, der mit mindestens einem Stückgut beladenen Transporttasche, wenn sich die Transporttasche in einer Entladestellung befindet in einer vertikalen Richtung in der Art anzuheben, dass das mindestens eine Stückgut mittels einer Schubeinrichtung durch eine Stirnseite eines Grundkörpers der Transporttasche zentral ausschiebbar ist, und wobei die Schubeinrichtung einen Schieber aufweist, der durch eine andere Stirnseite des Grundkörpers in ein inneres des Grundkörpers eingreift, wo sich das mindestens eine Stückgut befindet, wenn der Boden angehoben ist. Zum Entladen sind also die zwei gegenüberliegenden geöffneten Stirnseiten, der in der vertikalen Richtung anhebbare Boden sowie der durch eine der Stirnseiten durchgreifende Schieber der Schubeinrichtung erforderlich. Aus der noch nicht veröffentlichten DE Gebrauchsmusteranmeldung mit dem Aktenzeichen 20 2017 100 206.3 ist ein Fördergutbehälter für eine Hängefördereinrichtung zum Transportieren von Fördergut bekannt, der zwischen einer Öffnungsstellung und einer Schließstellung verstellbar ist. Der Fördergutbehälter weist einen Boden auf, der einer Auswerfvorrichtung mechanisch zugeordnet ist. Mittels der Auswerfvorrichtung ist der Boden zwischen einer Transportstellung in der das Fördergut innerhalb des Fördergutbehälters lagerbar und einer Auswerfstellung, in der das Fördergut aus dem Fördergutbehälter auswerfbar ist, verstellbar. In der WO 2018 078 098 A1 werden ein Verfahren und eine Vorrichtung zum Öffnen einer Transporttasche zum Be- und/oder Entladen vorgeschlagen, wobei die Transporttasche mit einem Fördersystem insbesondere hängend entlang eines Förderwegs zu einer Vorrichtung zum Öffnen der Transporttasche gefördert wird. Die Transporttasche weist eine Vorderwand und eine Rückwand auf und ist mit einem beweglichen Schubelement versehen, das eine Relativbewegung der Vorderwand und der Rückwand zueinander zwischen einem geschlossenen Taschenzustand und einem geöffneten Taschenzustand bewirkt. Mittels einer aktiv bewegten Schubeinrichtung wird eine Schubkraft auf ein erstes Ende des Schubelements der Transporttasche ausgeübt und das Schubelement aus einer Ruhekonformation in eine schubkraftbeaufschlagte Konformation überführt. Dadurch werden die Vorderwand und die Rückwand relativ zueinander in Richtung eines geöffneten Taschenzustands bewegt und die Transporttasche wird zum Be- und/oder Entladen geöffnet. Die WO 2017 088 078 A1 betrifft eine Transporttasche für den hängenden Transport eines Transportgutes entlang einer Förderrichtung mittels einer Hängefördereinrichtung, enthaltend eine Taschenrückwand und eine Beutelwand, welche zusammen mit der Taschenrückwand ein Aufnahmefach für das Transportgut ausbildet, wobei das Aufnahmefach eine Aufnahmeöffnung für das Transportgut ausbildet und derart ausgebildet ist, dass dieses eine Offenstellung und eine platzsparende Kompaktlage einnehmen kann, ferner enthaltend ein Befestigungsmittel zum Verbinden der Transporttasche mit einem Förderorgan der Hängefördereinrichtung, sowie enthaltend mindestens ein Steuerelement, welches mit einem als Steuerkulisse ausgebildeten Aktivierungsmittel der Hängefördereinrichtung zusammenwirken kann, und über welche das Aufnahmefach in die Offenstellung bewegt oder in dieser gehalten werden kann. Das mindestens eine Steuerelement ist an der Beutelwand der Transporttasche angeordnet.

### Zusammenfassung der Erfindung

Ausgehend von diesem Stand der Technik liegt der vorliegenden Erfindung die Aufgabe zugrunde, einen möglichst ressourcensparendes und dennoch wiederholbar störungsfreies Entladen eines Fördergutbehälters an einer Entladestation eines Hängefördersystems zu ermöglichen.

Die Aufgabe ist bei einem Verfahren zum Entladen eines aus einem biegeschlaffen Material eines Fördergutbehälters aufgenommenen Förderguts mittels einer Entladestation eines Hängefördersystems durch bereitstellen der Entladestation, aneinander annähern des Fördergutbehälters und der Entladestation, koppeln des biegeschlaffen Materials des Fördergutbehälters mit der Entladestation durch eine von der Station aus wirkende Haltekraft, neigen des gekoppelten biegeschlaffen Materials und auswerfen des Fördergut aus dem Fördergutbehälter in einer Gleitbewegung gelöst. Das biegeschlaffe Material des Fördergutbehälters selbst wird mit der Entladestation gekoppelt. Dadurch kann der Fördergutbehälter besonders einfach aufgebaut sein. Insbesondere kann das biegeschlaffe Material versteifungsfrei aufgebaut sein, also beispielsweise keine versteifenden Beplankungen und/oder ähnliche eine Elastizität und/oder Biegbarkeit des biegeschlaffen Materials herabsetzende Vorrichtungen aufweisen. Unter einem biegeschlaffen Material kann ein beliebiges Textil und/oder eine Folie verstanden werden. Insbesondere kann ein Material darunter verstanden werden, das sich aufgrund eines Eigengewichts und/oder des Gewichts des dem Fördergutbehälter aufgenommenen Förderguts verformt und sich dabei insbesondere an eine Außenkontur des Förderguts anpasst. Das biegeschlaffen Material selbst wird geneigt. Dadurch kann auf ein aufwändiges Neigen des gesamten Fördergutbehälters, beispielsweise durch eine entsprechende Mechanik verzichtet werden. Außerdem kann ein entsprechender Bauraum, der zum Neigen des gesamten Fördergutbehälters erforderlich wäre, eingespart werden. Insofern kann ein kompakter Bau des Hängefördersystems realisiert werden. Das Auswerfen selbst kann in einer Gleitbewegung erfolgen, wobei vorzugsweise keine zusätzlichen Hilfsmittel wie Schieber und/oder ähnliches erforderlich sind. Die Entladestation kann also Auswerfschieberfrei gestaltet werden. Besonders vorzugsweise erfolgt dann das Auswerfen des Förderguts in einer passiven Gleitbewegung, allein durch eine Hangabtriebskraft des Förderguts entlang eines entsprechenden Auswerfgefälles der Neigung des gekoppelten biegeschlaffen Materials. Das biegeschlaffe Material kann eine reibmindernde Ausrüstung, beispielsweise eine Beschichtung mit PTFE (Polytetrafluorethylen, bekannt als Teflon) ausweisen. Der Fördergutbehälter selbst weist vorzugsweise im Vergleich zum Stand der Technik keine eigene Auswerfvorrichtung und abgesehen von dem biegeschlaffen Material insbesondere selbst auch keinen versteiften Boden auf und stellt daher bevorzugt eine stark vereinfachte Alternative zu bekannten Fördergutbehältern dar. Erst durch das Koppeln des biegeschlaffen Materials und/oder des Bodens mit der Entladestation entsteht eine für das Auswerfen verwendete Gleitfläche in einem Inneren des Fördergutbehälters. Unter Koppeln kann besonders bevorzugt verstanden werden, dass auf das biegeschlaffe Material eine Haltekraft wirkt beziehungsweise bewirkt wird, die einen Kraftschluss mit der Entladestation bewirkt. Vorzugsweise wird dabei das biegeschlaffe Material und/oder ein aufgesetztes Koppelement direkt mit der Entladestation in einen Anlagekontakt gebracht und mittels des Kraftschlusses beziehungsweise der Haltekraft dort fixiert. Alternativ oder zusätzlich kann zum Koppeln auch ein Formschluss mit der Entladestation bewirkt werden, wobeidie Haltekraft durch den Formschluss bewirkt wird. Durch die Haltekraft ist es möglich, den Fördergutbehälter, insbesondere den Boden beziehungsweise die Gleitfläche des Fördergutbehälters, insbesondere das den Boden beziehungsweise die Gleitfläche bildende biegeschlaffe Material, zum Zwecke des Entladens zu neigen. Vorzugsweise wird der Boden beziehungsweise die Gleitfläche erst durch die Haltekraft gebildet beziehungsweise zum Bereitstellen des Bodens beziehungsweise der Gleitfläche aufgespannt.

Um ein besonders störungsfreies Entladen bzw. Auswerfen des Förderguts zu erreichen, kann das biegeschlaffe Material mittels der Entladestation gespannt werden. Vorzugsweise weist das biegeschlaffe Material eine Vielzahl der Koppelpunkte auf, an denen mittels der Entladestation eine Kraft beziehungsweise die Haltekraft auf das biegeschlaffe Material zum Aufspannen übertragen werden kann. Dadurch ergibt sich eine das Auswerfgefälle aufweisende Ebene, insbesondere falls zumindest drei, vorzugsweise vier der Koppelpunkte vorgesehen sind. Entlang der mit dem Auswerfgefälle geneigten Ebene kann das Fördergut in der passiven Gleitbewegung aus dem Fördergutbehälter herausrutschen. Die Ebene und damit ein ebener Boden wird dazu aufgespannt. Auf dem aufgespannten ebenen Boden erfolgt die vorzugsweise passive Gleitbewegung. Das Auswerfen erfolgt also versteifungsfrei, wobei der Fördergutbehälter selbst beziehungsweise das biegeschlaffe Material versteifungsfrei ausgebildet ist. Für den Fall, dass mehrere Koppelpunkte Verwendung finden, kann unter der Haltekraft beziehungsweise Anziehungskraft eine Summe von Teilhaltekräften der jeweiligen Koppelpunkte verstanden werden.

Besonders bevorzugt kann das Koppeln des biegeschlaffen Materials mittels eines an der Entladestation erzeugten Energieflusses erfolgen, der eine Anziehungskraft zwischen der Entladestation und dem Fördergutbehälter, insbesondere des biegeschlaffen Materials, bewirkt. Bei dem Energiefluss kann es sich beispielsweise um einen pneumatischen und/oder elektrischen Energiefluss handeln, wobei dadurch die Haltekraft als eine pneumatische und/oder elektrische Anziehungskraft erzeugt wird. Mittels der Anziehungskraft wird also das biegeschlaffe Material des Fördergutbehälters mit der Entladestation kraftschlüssig gekoppelt. Im gekoppelten Zustand erfolgt das Auswerfen des Förderguts. Sobald das Fördergut ausgeworfen ist, wird der Fördergutbehälter wieder abgekoppelt. Dies erfolgt durch ein Abschalten des Energieflusses. Bei dem Energiefluss kann es sich beispielsweise um einen elektrischen Strom handeln, wobei also eine Spule der Entladestation mit Elektrizität bestromt wird. Alternativ kann auch eine Spule oder Spulenanordnung des Fördergutbehälters bestromt werden, beispielsweise durch eine induktive Energieübertragung. Bevorzugt kann das biegeschlaffe Material magnetische Eigenschaften aufweisen. Vorzugsweise ist ein magnetisches Material, wie beispielsweise ein Metall in das biegeschlaffe Material eingenäht und/oder eingewoben. Bei einer anderen bevorzugten Ausführungsform wird der Energiefluss pneumatisch erzeugt, also beispielsweise durch Abpumpen von Luft ein Unterdruck erzeugt, der die Anziehungskraft auf das biegeschlaffe Material bewirkt. Insbesondere kann eine Vakuumgreifvorrichtung evakuiert werden, mittels der das biegeschlaffe Material gegriffen bzw. angezogen wird. Die Vakuumgreifvorrichtung kann auf bekannte Art und Weise ausgestaltet sein, insbesondere einen evakuierbaren offenporigen Schaum aufweisen, der besonders vorteilhaft ein flächiges Anziehen bzw. fixieren des biegeschlaffen Materials ermöglicht. Der offenporige evakuierbare Schaum kann eine ebene Fläche aufweisen, an der sich eine Außenseite des biegeschlaffen Materials bzw. des Fördergutbehälters anlegt, sodass auf einer Innenseite des Fördergutbehälters bzw. biegeschlaffen Materials eine ebene Fläche entsteht beziehungsweise gebildet wird, die wie vorab beschrieben das Auswerfgefälle aufweist beziehungsweise bildet und entlang der das Fördergut in der passiven Gleitbewegung auswerfbar ist. Durch das Abschalten des Energieflusses wird die Anziehungskraft und damit die Haltekraft ebenfalls abgeschaltet, vorzugsweise zumindest zum Abkoppeln reduziert, insbesondere auf einen Wert von Null reduziert.

Das Verfahren kann analog auch mit einem Fördergutbehälter in einer Beladestation beim Beladen durchgeführt werden. In diesem Fall erfolgt vorzugsweise kein Neigen des biegeschlaffen Materials, wobei die Gleitbewegung in den Fördergutbehälter hinein verläuft und optional erzwungen werden kann, beispielsweise durch einen auf das Fördergut wirkenden Schieber, der dieses in den Fördergutbehälter hineinschiebt. Alternativ kann das Beladen auch von oben erfolgen, wobei gegebenenfalls ebenfalls das Koppeln vorteilhaft eingesetzt werden kann.

Die Aufgabe ist außerdem durch einen Fördergutbehälter für ein Hängefördersystem zum Transportieren von Fördergut gelöst. Der Fördergutbehälter weist ein zweiseitig aufgehängtes biegeschlaffes Material auf, in dem das Fördergut für das Transportieren aufnehmbar ist, wobei der Fördergutbehälter zum Entladen mit einer Entladestation zusammenwirkt. Das biegeschlaffe Material weist zumindest ein mit der Entladestation zum Übertragen einer Haltekraft beziehungsweise Anziehungskraft zusammenwirkendes Kraftübertragungselement auf. Die Haltekraft beziehungsweise Anziehungskraft wird von der Beladestation und/oder Entladestation bewirkt. Die Haltekraft beziehungsweise die von der Beladestation und/oder Entladestation bewirkte Anziehungskraft ist vorzugsweise abschaltbar. Durch das Abschalten ist der Fördergutbehälter von der Beladestation und/oder Entladestation abkoppelbar. Der Fördergutbehälter ist also durch eine von der Beladestation und/oder Entladestation ausgehende Wirkung, insbesondere die Anziehungskraft, vorzugsweise den Energiefluss, wahlweise mit diesen koppelbar und wieder abkoppelbar. Dadurch kann während eines Entladevorgangs ein vorzugsweise kraftschlüssiges Koppeln des biegeschlaffen Materials mit der Entladestation bewirkt werden. Über das Kraftübertragungselement kann auch ein Neigen des biegeschlaffen Materials selbst zum Zwecke des Entladens des Förderguts bewirkt werden. Weiter Maßnahmen an dem biegeschlaffen Material oder an dem Fördergutbehälter sind zum Entladen an der Entladestation nicht erforderlich. Eine entsprechende Mechanisierung, beispielsweise zum Neigen des biegeschlaffen Materials ist an der Entladestation vorgesehen. Dadurch kann der Fördergutbehälter, der üblicherweise als Massenware in großen Stückzahlen bereitgestellt werden muss, besonders einfach aufgebaut werden. Die Mechanisierung zum Entladen, insbesondere zum Neigen des biegeschlaffen Materials ist an der Entladestation vorgesehen, die zum Betreiben des Hängefördersystems in deutlich kleineren Stückzahlen bereitgestellt werden muss. Dadurch ergibt sich ein insgesamt ressourcensparendes und einfach aufgebautes Gesamtsystem. Insbesondere ist das Entladen des Fördergutbehälters vereinfacht. Außerdem ist es möglich, dass der Fördergutbehälter analog mit einer Beladestation zusammenwirkt und durch ein analog erfolgendes Koppeln des biegeschlaffen Materials mit der Beladestation auch ein Beladen vereinfacht werden kann. Bevorzugt muss dazu kein Neigen erfolgen.

Es ist denkbar, dass das Kraftübertragungselement in das biegeschlaffe Material integriert, auf dieses vorzugsweise von außen aufgesetzt, geklammert, genietet und oder in dieses eingenäht ist. Der Fördergutbehälter ist einfach herstellbar, wobei das Kraftübertragungselement das Be- und Entladen nicht oder zumindest nur minimal beeinflusst.

Bei einer bevorzugten Ausgestaltung des Fördergutbehälters ist es denkbar, dass das Kraftübertragungselement formschlüssig mit der Entladestation zusammenwirkt. Es kann also ein Haken, eine Schlaufe, ein Klettverschluss und/oder ähnliches an einer Außenseite des biegeschlaffen Materials vorgesehen sein. Das Übertragen der berührungsfrei erzeugbaren Anziehungskraft auf elektromagnetischem und/oder pneumatischem Wege kann alternativ oder zusätzlich zum formschlüssigen Übertragen der Haltekraft erfolgen.

Zum Übertragen der elektromagnetischen Anziehungskraft kann das Kraftübertragungselement magnetische Fasern aufweisen, die in das biegeschlaffe Material eingewoben sind. Dadurch baut das Kraftübertragungselement möglichst flach und unauffällig und stört wenig bei einem Entladen des Fördergutbehälters.

Die Aufgabe ist außerdem durch eine Entladestation gelöst, die zum Entladen mit einem vorab beschriebenen Fördergutbehälter zusammenwirkt. Die Entladestation weist eine Entladevorrichtung, die zum Entladen des Fördergutbehälters neigbar oder voreingestellt geneigt und/oder mittels der ein biegeschlaffes Material des Fördergutbehälters unmittelbar neigbar ist und zumindest eine Koppelvorrichtung auf, die zum Entladen mit dem biegeschlaffen Material des Fördergutbehälters koppelbar ist. Mittels der Koppelvorrichtung ist das biegeschlaffe Material während des Entladens mit der Entladevorrichtung der Entladestation koppelbar, dadurch an dieser zeitweise fixierbar und danach zerstörungsfrei wieder abkoppelbar. Das Koppeln und Neigen wirkt auf das biegeschlaffe Material selbst, erfolgt also bis auf das Kraftübertragungselement des Fördergutbehälters, seitens des Fördergutbehälters mechanisierungsfrei. Eine entsprechende Mechanik und/oder Formgebung zum Neigen des biegeschlaffen Materials und damit zum Erzeugen des Auswerfgefälles sind lediglich an der Entladevorrichtung der Entladestation vorgesehen. Auf entsprechende mechanische Elemente wie Versteifungen, Betätigungsvorrichtungen am Fördergutbehälter kann also verzichtet werden. Unter unmittelbar neigbar kann verstanden werden, dass lediglich das biegeschlaffe Material geneigt wird und der restliche Fördergutbehälter nicht bewegt wird. Beispielsweise muss eine Aufhängung beziehungsweise ein Rahmen zur Aufhängung des biegeschlaffen Materials nicht manipuliert und/oder betätigt werden.

Besonders bevorzugt weist die Koppelvorrichtung zumindest einen Elektromagnet auf. Mittels des Elektromagnets kann eine elektromagnetische Anziehungskraft auf ein entsprechend an dem Fördergutbehälter vorgesehenes magnetisches Material ausgeübt werden, beispielsweise ein Metall. Dadurch kann auf einfache Art und Weise das Koppeln erfolgen.

Gemäß einer anderen bevorzugten Ausgestaltung der Entladestation weist die Koppelvorrichtung eine Vakuumgreifvorrichtung auf, beispielsweise einen Vakuumgreifer und/oder einen offenporigen Schaum. Das Greifen erfolgt also auf pneumatischem Wege. In beiden Fällen, also im Falle einer elektromagnetischen und/oder einer durch Vakuum erzeugten Anziehungskraft, kann diese durch eine entsprechende Steuerung an der Entladestation angeschaltet und ausgeschaltet werden. Das biegeschlaffe Material des Fördergutbehälters wird also lediglich für die Zeit des eigentlichen Entladens an der Entladevorrichtung fixiert, also nach dem Entladen wieder freigegeben. Dadurch kann ein besonders störungssicheres Entladen und Ausfahren des Fördergutbehälters aus der Entladestation erfolgen.

Um eine besonders flexible Entladestation bereitzustellen, kann die Entladevorrichtung eine Plattform aufweisen, die in zwei Richtungen abwärts neigbar ist. Dadurch kann an der Entladestation ein zweiseitiges Entladen des Fördergutbehälters erfolgen. Alternativ oder zusätzlich ist es möglich, dass die Entladestation, insbesondere die Plattform der Entladevorrichtung von unten an eine Unterseite des Fördergutbehälters annäherbar ist, also höhenverstellbar ist. Der Fördergutbehälter kann also oberhalb der Entladevorrichtung in die Entladestation einfahren und wird dann durch ein Annähern der Entladevorrichtung von unterhalb und ein Koppeln des biegeschlaffen Materials sowie Neigen desselben entladen. Die Begriffe oberhalb und unterhalb sind in Richtung einer wirkenden Schwerkraft zu verstehen. Dabei kann bereits das Fördergut durch das biegeschlaffe Material hindurch angehoben werden. Besonders bevorzugt ist die Entladevorrichtung bzw. die Plattform bereits mit einer entsprechenden Neigung voreingestellt, sodass beim Annähern von unten automatisch das biegeschlaffe Material und das sich darauf befindliche Fördergut einseitig angehoben wird. Das Anheben erfolgt so lange, bis das Auswerfgefälle hergestellt ist und das Fördergut in der passiven Gleitbewegung aus dem Fördergutbehälter herausrutscht.

Die Aufgabe ist schließlich durch ein Hängefördersystem mit einer vorab beschriebenen Entladestation und einem vorab beschriebenen Fördergutbehälter gelöst. Das Hängefördersystem ist insbesondere zum Durchführen eines vorab beschriebenen Verfahrens eingerichtet, konstruiert und/oder programmiert. Es ergeben sich die vorab beschriebenen Vorteile.

Weitere Vorteile ergeben sich aus den Unteransprüchen und der nachfolgenden Beschreibung eines bevorzugten Ausführungsbeispiels.

### Kurzbeschreibung der Figuren

Im Folgenden wird die Erfindung anhand eines in den Figuren dargestellten Ausführungsbeispiels näher erläutert. Es zeigen:
- Figur 1: eine dreidimensionale Ansicht eines Fördergutbehälters von schräg seitlich hinten;
- Figur 2: eine dreidimensionale Ansicht von schräg seitlich hinten des in Figur 1 gezeigten Fördergutbehälter, jedoch mit aufgenommenem Fördergut;
- Figur 3: eine dreidimensionale Ansicht von schräg seitlich oben eines Fördergutbehälters analog des in den Figuren 1 und 2 gezeigten, jedoch gekoppelt mit einer Station;
- Figur 4: eine dreidimensionale Ansicht von hinten der in Figur 3 gezeigten Entladestation mit dem gekoppelten Fördergutbehälter, wobei ein einseitiges Anheben eines biegeschlaffen Materials des Fördergutbehälters mittels der Entladestation erfolgt;
- Figuren 5a und 5b: jeweils eine stark schematisierte Ansicht analog der in Figur 4 gezeigten Ansicht eines mit einer Entladestation gekoppelten Fördergutbehälters zum Aufzeigen einer beidseitigen Entladbarkeit;
- Figur 6: eine schematische Ansicht eines mit einer Entladestation gekoppelten Fördergutbehälters, wobei das Koppeln mittels einer Vakuumgreifvorrichtung erfolgt;
- Figur 7: eine weitere schematische Ansicht eines mit einer Entladestation gekoppelten Fördergutbehälters, wobei das Koppeln mittels elektromagnetischen Kräften erfolgt;
- Figuren 8a bis 8c: eine weitere schematische Ansicht eines Fördergutbehälters in drei Phasen während eines Koppelns mit einer Entladestation, wobei das Koppeln auf mechanischem Wege erfolgt;
- Figuren 9a und 9b: jeweils eine Detailansicht einer Entladevorrichtung einer Entladestation mit einer Vorrichtung zum Spannen eines biegeschlaffen Materials des Fördergutbehälters;
- Figur 10: eine schematische Schnittansicht eines Teils eines biegeschlaffen Materials eines mit einer Entladestation koppelbaren Fördergutbehälters mit einem aufgesetzten Kraftübertragungselement; und
- Figur 11: ein Ablaufdiagramm eines Verfahrens zum Entladen eines Fördergutbehälters mittels einer Entladestation.

### Beschreibung bevorzugter Ausführungsbeispiele

Bevor die Erfindung im Detail beschrieben wird, ist darauf hinzuweisen, dass sie nicht auf die jeweiligen Bauteile der Einrichtung sowie die jeweiligen Verfahrensschritte beschränkt ist, da diese Bauteile und Verfahren variieren können. Die hier verwendeten Begriffe sind lediglich dafür bestimmt, besondere Ausführungsformen zu beschreiben und werden nicht einschränkend verwendet. Wenn zudem in der Beschreibung oder in den Ansprüchen die Einzahl oder unbestimmte Artikel verwendet werden, bezieht sich dies auch auf die Mehrzahl dieser Elemente, solange nicht der Gesamtzusammenhang eindeutig etwas Anderes deutlich macht.

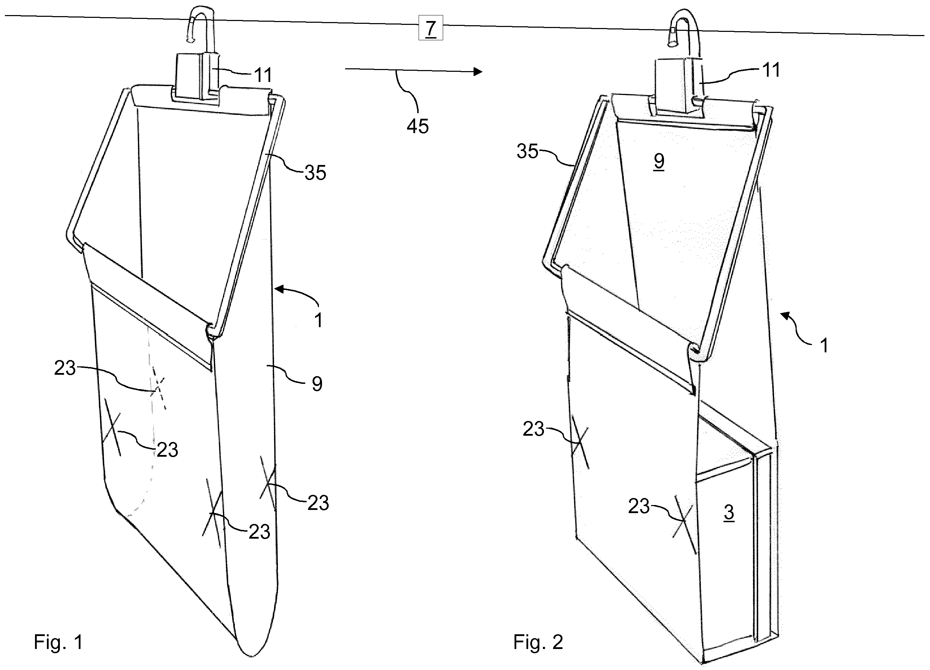

Die Figuren 1 und 2 zeigen jeweils eine dreidimensionale Ansicht von schräg seitlich hinten eines Fördergutbehälters 1 zum Transportieren eines Förderguts 3. Figur 1 zeigt den Fördergutbehälter 1 ohne und Figur 2 mit aufgenommenem Fördergut 3. Der Fördergutbehälter 1 kann mittels eines Hängeträgers 11 und eines Hängefördersystems 7 transportiert werden. Hängefördersysteme in denen Fördergutbehälter eingehängt und transportiert werden können, sind bekannt und werden daher nicht im Detail beschrieben. Der Fördergutbehälter 1 weist ein biegeschlaffes Material 9 auf, das in Form einer Bahn beidseitig aufgehängt ist und dadurch eine Schlaufe bzw. Bucht bildet, in der das Fördergut 3 aufgenommen und transportiert werden kann. Die Bahn des biegeschlaffen Materials 9 ist an einem Rahmen 35 jeweils mittels einer Schleife bzw. Umnähung an entsprechenden Stangen des Rahmens 35 gegenüberliegend gelenkig aufgehängt. Der Rahmen 35 wiederum ist gelenkig bzw. verschwenkbar an dem Hängeträger 11 gelagert. Dadurch kann ein von dem biegeschlaffen Material 9 gebildeter Innenraum des Fördergutbehälters 1 an eine Größe des Förderguts 3 angepasst werden.

Der Fördergutbehälter 1 weist vier Kraftübertragungselemente 23 auf, die in den Figuren 1 und 2 jeweils mittels eines Kreuzes symbolisiert sind.

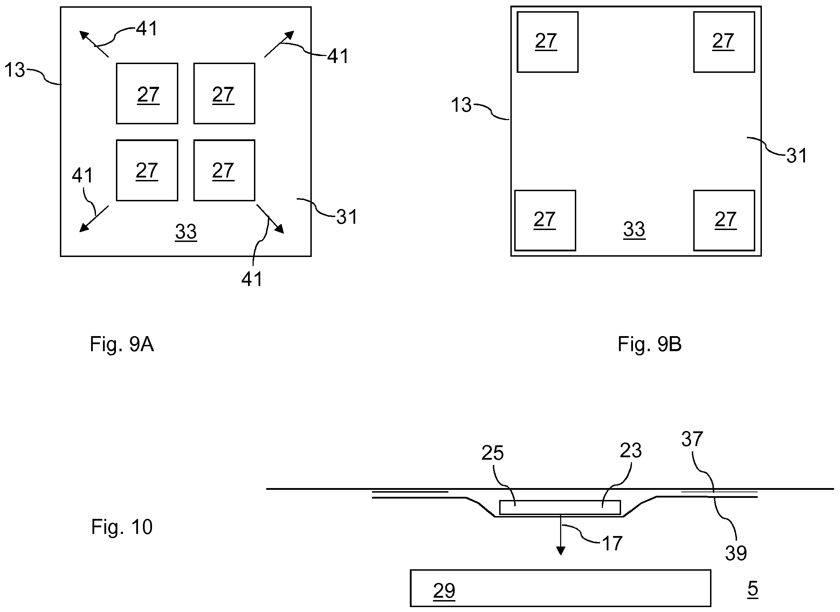

Figur 10 zeigt eine schematische Schnittansicht durch eines der in Figur 1 angedeuteten Kraftübertragungselemente 23. Zu erkennen ist das biegeschlaffe Material 9, auf das vorzugsweise außenseitig das Kraftübertragungselement 23 aufgesetzt ist. Vorzugsweise ist das Kraftübertragungselement 23 mittels eines Abdeckmaterials 39 außenseitig an dem Fördergutbehälter 1 angebracht. Das Abdeckmaterial 39 ist vorzugsweise identisch mit dem biegeschlaffen Material 9 und mittels einer Fixierung 37 aufgesetzt und/oder umgenäht. Das Kraftübertragungselement 23 ist also zwischen dem Abdeckmaterial 39 und dem eigentlichen biegeschlaffen Material 9 angeordnet bzw. eingeschlossen. Die Fixierung 37 kann als Naht, Klebung, Vernietung und/oder ähnliches ausgeführt sein. Alternativ oder zusätzlich ist es denkbar, das Kraftübertragungselement 23 mittels der Fixierung 37, vorzugsweise einer Verklebung direkt außenseitig oder innenseitig auf das biegeschlaffe Material 9 aufzukleben und/oder mit diesem zu verbinden, beispielsweise mittels einer Vernietung.

Wie in Figur 10 weiter zu erkennen, weist das Kraftübertragungselement 23 einen magnetische Eigenschaften aufweisenden Stoff 25, insbesondere ein Metall auf. In einer besonders einfachen Ausgestaltung kann pro Kraftübertragungselement 23 lediglich ein magnetisches Niet vorgesehen sein.

Mittels eines Elektromagnets 29 kann auf den magnetischen Stoff 25, also das Kraftübertragungselement 23 eine elektromagnetische Anziehungskraft ausgeübt werden. Die Anziehungskraft ist in Figur 10 beispielhaft als Haltekraft 17 zum kraftschlüssigen Fixieren des Fördergutbehälters 1 an einer lediglich mittels des Bezugszeichens 5 angedeuteten Station, beispielsweise eine Entladestation und/oder Beladestation, eingezeichnet. Anstelle des Elektromagnets 29 kann auch mittels eines Permanentmagnets die Haltekraft 17 in dem Kraftübertragungselement induziert werden. Gegebenenfalls kann also das Kraftübertragungselement 23 und/oder die Entladestation einen oder mehrere Permanentmagnete aufweisen.

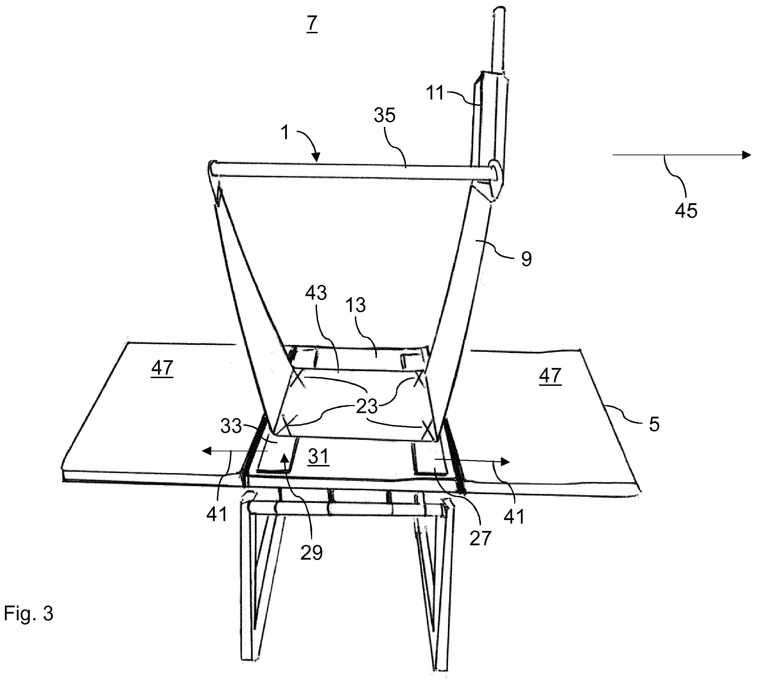

Figur 3 zeigt die in Figur 10 lediglich angedeutete Station, beispielhaft als Entladestation 5 mit gekoppeltem Fördergutbehälter 1 ausgebildet. Die Station kann gegebenenfalls auch als Beladestation dienen.

Es ist zu erkennen, dass der Fördergutbehälter 1 vier der Kraftübertragungselemente 23 aufweist, die mittels einer Koppelvorrichtung 27 der Entladestation 5 angezogen und damit an die Entladestation 5 gekoppelt werden. Die Koppelvorrichtung 27 weist den in Figur 10 symbolisierten Elektromagnet 29 auf oder wirkt zumindest mit diesem zusammen, ist also magnetisierbar.

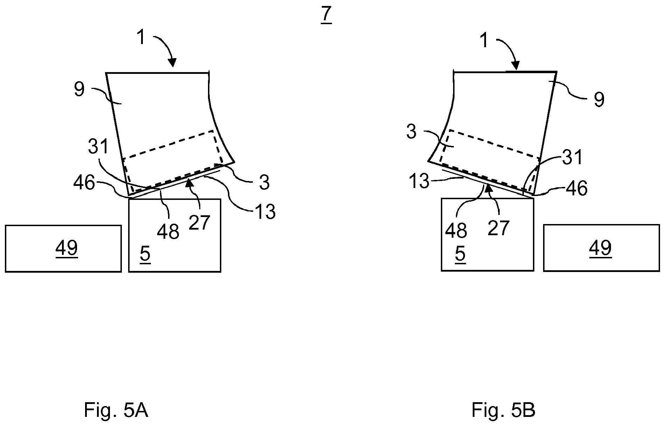

Die Koppelvorrichtung 27 ist Teil einer Entladevorrichtung 13 der Entladestation 5. In dem in Figur 5 gezeigten Ausführungsbeispiel weist die Entladevorrichtung 13 neben der Koppelvorrichtung 27, also dem Elektromagnet 29 zusätzlich eine optionale Spannvorrichtung 33 auf. Die Entladevorrichtung 13 weist vorzugsweise eine Plattform 31 mit einer ebenen Oberfläche auf. Alternativ oder zusätzlich ist auf der ebenen Fläche der Plattform 31 die Spannvorrichtung 33 vorgesehen.

Die Spannvorrichtung 33 weist zwei parallel angeordnete Streifen auf. Mittels zwei ersten Pfeilen 41 ist in Figur 3 dargestellt, dass diese auseinander und wieder aufeinander zu bewegt werden können. Durch das Auseinanderbewegen kann ein Spannen des biegeschlaffen Materials 9 erfolgen. Dadurch kann innerhalb des Fördergutbehälters 1 auf dem biegeschlaffen Material eine Auswerfebene 43 entstehen, aufgespannt bzw. gebildet werden. Auf der Auswerfebene 43 kann eine Gleitbewegung des Förderguts 3 zum Auswerfen aus dem Fördergutbehälter 1 erfolgen.

In Figur 3 ist eine Fahrtrichtung 45 des Fördergutbehälters 1 eingezeichnet. Außerdem ist zu erkennen, dass die Entladestation 5 optional beidseitig der Entladevorrichtung 13 plattenförmige Leitelemente zum Führen des Fördergutbehälters 1 innerhalb der Entladestation 5 aufweist. Bei einem Einfahren des Fördergutbehälters 1 in die Entladestation 5 stößt zunächst das biegeschlaffe Material 9 an eines der Leitelemente 47 an. Dadurch kann das Fördergut 3 bereits leicht angehoben werden. Bei einem weiteren Einfahren überstreicht das biegeschlaffe Material 9 auch die Entladevorrichtung 13. Dort angekommen kann das Koppeln des biegeschlaffe Materials 9, also der Kraftübertragungselemente 23 des biegeschlaffen Materials 9 mit der Koppelvorrichtung 27 der Entladevorrichtung 13 der Entladestation 5 erfolgen. Dazu kann zunächst der Elektromagnet 29 eingeschaltet und optional mittels der Spannvorrichtung 33 ein Spannen des biegeschlaffen Materials 9 erfolgen.

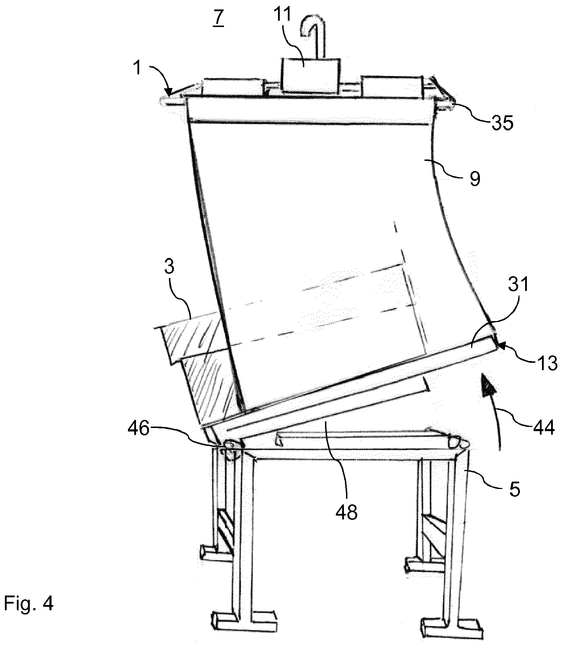

Daran anschließend erfolgt dann das eigentliche Auswerfen des Förderguts 3, was in Figur 4 dargestellt ist. Figur 4 zeigt eine Ansicht des Fördergutbehälters 1 von hinten, wobei im Unterschied zur Darstellung in Figur 3 das Auswerfen des Förderguts 3 bereits begonnen hat. Dazu ist die Entladevorrichtung 13, also insbesondere die Plattform 31 durch Verschwenken um eine Schwenkachse 46 geneigt. Dadurch bildet sich ein Auswerfgefälle 48 an dem vorzugsweise aufgespannten biegeschlaffen Material 9, also insbesondere der Auswerfebene 43. Das Verschwenken der Entladevorrichtung 13 ist in Figur 4 mittels eines geschwungenen Pfeils 44 symbolisiert.

Es ist zu erkennen, dass lediglich das biegeschlaffe Material 9 teilweise geneigt wird. Dies erfolgt gemeinsam mit der Entladevorrichtung 13 und in einem gekoppelten Zustand mit der Entladestation 5. Außerdem ist deutlich zu erkennen, dass dazu der übrige Fördergutbehälter 1, insbesondere der Rahmen 35 nicht geneigt und/oder verschwenkt werden muss. Das Entladen kann dadurch ohne ein Ausschwenken des gesamten Fördergutbehälters 1 erfolgen, wodurch die Entladestation 5 einen vergleichsweise kleinen Bauraum benötigt.

Wie in den Figuren 5a und 5b schematisch dargestellt, kann die Entladevorrichtung 13 der Entladestation 5 optional beidseitig eine Schwenkachse 46 aufweisen. Dadurch ist die Entladevorrichtung wahlweise beidseitig verschwenkbar, sodass die Entladestation 5 flexibel auf einer ersten Seite oder wahlweise auf einer der ersten Seite gegenüberliegenden zweiten Seite entladbar ist. Das Entladen des Fördergutbehälters 1 erfolgt gemäß der Figuren 5a und 5b in einen Auffangbehälter 49, der optional neben der Entladestation 5 aufgestellt sein kann. Es ist in den Figuren 5a und 5b zu erkennen, dass der Auffangbehälter wahlweise links oder rechts der Entladestation 5 aufgestellt und mittels einer entsprechenden Neigung der Entladevorrichtung 13 in Richtung des Auffangbehälters 49 entladen werden kann.

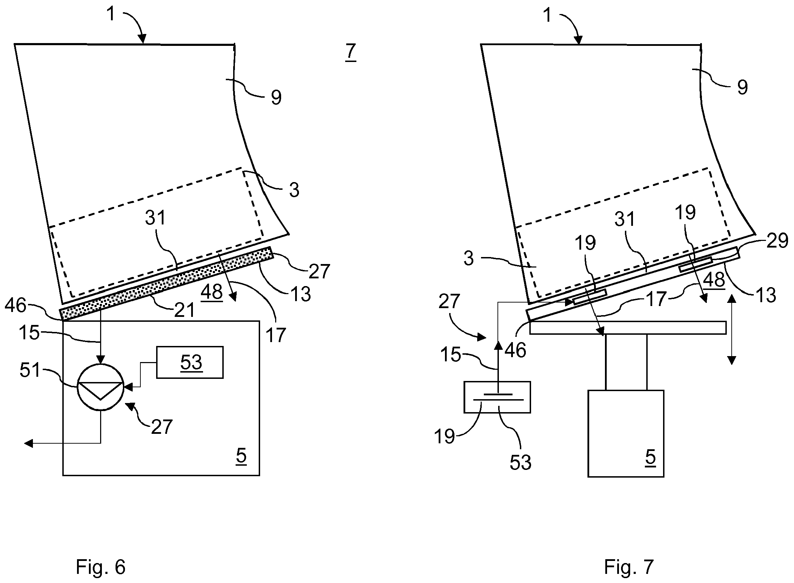

Figur 6 zeigt eine schematische Vorderansicht eines Fördergutbehälters 1 analog den in Figuren 1 bis 5 dargestellten Fördergutbehältern. Im Unterschied weist die Entladevorrichtung 13 eine Vakuumgreifvorrichtung 21 auf. Diese weist vorzugsweise einen offenporigen Schaum auf, der mittels einer Vakuumpumpe 51 evakuierbar ist. Dadurch kann das biegeschlaffe Material 9 mittels einer pneumatischen Anziehungskraft zum Bewirken der Haltekraft 17 flächig angezogen werden. Dadurch erfolgt das Koppeln des biegeschlaffe Materials 9 mit der Entladestation 5.

In diesem speziellen Fall wirkt eine Oberfläche des biegeschlaffen Materials 9 selbst als das Kraftübertragungselement 23. Zusätzliche Aufnäher oder Applikationen auf oder in dem biegeschlaffen Material 9 sind in dieser speziellen Ausgestaltung nicht erforderlich, jedoch zusätzlich denkbar. Dadurch kann der Fördergutbehälter besonders einfach aufgebaut werden. Die Entladestation 5 wirkt also mit einem applikationsfreien und versteifungsfreien Fördergutbehälter 1 zusammen, wobei dennoch ein sicheres Entladen des Förderguts 3 erfolgen kann. Zum Betreiben der Vakuumgreifvorrichtung 21 wird mittels der Vakuumpumpe 51 zunächst ein Energiefluss 15, hier in Form eines Luftstroms erzeugt. Dieser wirkt auf die Vakuumgreifvorrichtung 21 und erzeugt dadurch die Anziehungskraft des biegeschlaffen Materials 9 an die Entladestation 5, also die Haltekraft 17.

Außerdem wirkt die Entladestation 5 mit einer Steuerung 53 zusammen oder weist diese auf. Die Steuerung 53 dient zum Anschalten und Ausschalten der Vakuumpumpe 51 und damit zum Einschalten und Abschalten der Haltekraft 17. Nach einem erfolgreichen Entladen des Fördergutbehälters 1 wird die Vakuumpumpe 51 damit der Energiefluss 15 abgeschaltet. Dadurch erfolgt ein Abkoppeln des Fördergutbehälters 1 von der Entladevorrichtung 13 der Entladestation 5.

Figur 7 zeigt eine weitere schematische Vordersicht eines Fördergutbehälters 1 in einer Entladestation 5 analog der Darstellung der Figur 6. Im Folgenden wird lediglich auf die Unterschiede eingegangen.

Im Unterschied zur Darstellung der Figur 6 wird der Energiefluss 15 als elektrischer Energiefluss mittels einer elektrischen Energiequelle 19 erzeugt. Dies erfolgt ebenfalls mittels einer Steuerung 53. Die Koppelvorrichtung 27 der Entladestation 5 weist den in Figur 10 bereits beschriebenen Elektromagnet 29 auf. Der Elektromagnet 29 weist vorzugsweise eine elektrische Spule auf, die mittels des elektrischen Energieflusses 15 bestromt wird. Der Elektromagnet 29 der Koppelvorrichtung 27 kann also mittels der Steuerung 53 durch das Ein- und Ausschalten des Energieflusses 15 aktiviert und deaktiviert werden. Die entsprechende Haltekraft 17, also die auf das Kraftübertragungselement 23 ausgeübte Anziehungskraft wird mittels der Steuerung 53 an- und abgeschaltet.

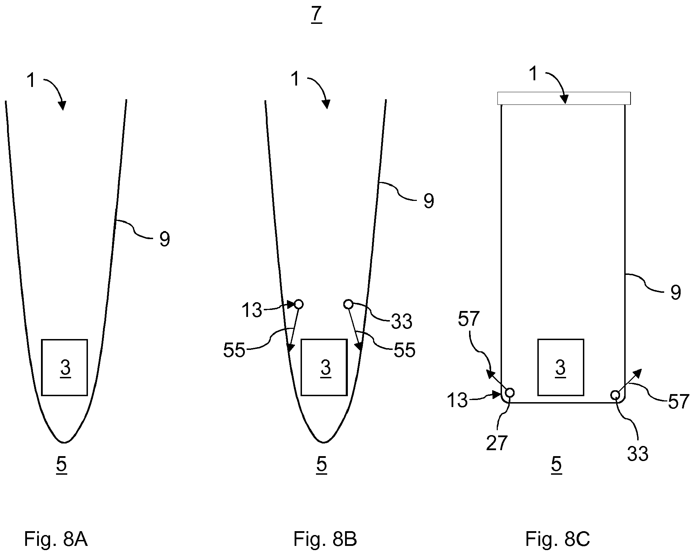

Die Figuren 8a bis 8c zeigen eine weitere mögliche Ausgestaltung einer Entladestation 5 mit einer formschlüssigen bzw. mechanischen Koppelvorrichtung 27. Die Koppelvorrichtung 27 wirkt ebenfalls als Spannvorrichtung 33 und weist dazu zwei lediglich mittels Kreisen symbolisierte Stäbe auf. Die Stäbe werden, wie in Figur 8b gezeigt, zunächst in einen Innenraum zwischen den zwei Bahnen des biegeschlaffen Materials 9 in den Fördergutbehälter 1 eingeführt. Wie mittels zweiten Pfeilen 55 in Figur 9b symbolisiert, werden diese an dem Fördergut 3 vorbei jeweils schräg seitlich nach unten verlagert. Dabei wird das biegeschlaffe Material 9 unterhalb des Fördergutes 3 aufgespannt, wobei sich die Auswerfebene 43 bildet. Zum Bilden des Auswerfgefälles 48 werden die Stangen der Koppelvorrichtung 27 jeweils einseitig schräg seitlich nach oben verlagert. Wie in Figur 8c gezeigt, weist die Auswerfebene 43 zunächst eine rechteckige Form auf. Durch das einseitige Verlagern der Stäbe der Spannvorrichtung 33 in Richtung dritter Pfeile 57 nimmt die Auswerfebene 43 eine Trapezform an, die in den Figuren 8a bis 8c nicht dargestellt ist. Auf der trapezförmigen Auswerfebene 43 kann die Gleitbewegung zum Auswerfen des Förderguts 3 erfolgen. Die beschriebenen und mittels der Pfeile 55 und 57 angedeuteten Bewegungen der Stäbe dienen zur kinematischen Verdeutlichung und können auch überlagert oder in einer anderen Reihenfolge durchgeführt werden.

Die Figuren 9a und 9b zeigen ein weiteres Ausführungsbeispiel einer Koppelvorrichtung 27, die eine Spannvorrichtung 33 zum Spannen des biegeschlaffen Materials 9 aufweist. Auf der Plattform 31 der Entladestation 5 sind insgesamt vier Koppelvorrichtungen 27 angeordnet. Diese können wie vorab beschrieben einen Elektromagnet 29 und/oder eine Vakuumgreifvorrichtung 21 aufweisen. Wie in Figur 9a gezeigt, sind diese vor einem Koppeln mit dem biegeschlaffen Material 9 zunächst mittig nebeneinander auf der Plattform 31 angeordnet. Zum Koppeln des biegeschlaffen Materials 9 und dabei spannen desselben werden diese wie in Figur 9a angedeutet in Richtung der ersten Pfeile 41 auseinanderbewegt. Dabei kann bereits die Vakuumgreifvorrichtung 21 und/oder der Elektromagnet 29 aktiviert sein.

In Figur 9b ist zu erkennen, dass die Koppelvorrichtungen 27 auseinander bewegt sind, sich also an Ecken der Plattform 31 befinden. Während des Auseinanderbewegens in Richtung der ersten Pfeile 41 kann das biegeschlaffe Material 9 bereits mittels der Haltekraft 17 aufgrund des Vakuums gekoppelt sein und kann dadurch gespannt werden.

Im Falle eines magnetischen Kraftübertragungselements 23 wird dieses aufgrund des Auseinanderbewegens der Koppelvorrichtungen 27 zwangsläufig erfasst, wobei sobald die elektromagnetische Haltekraft 17 auf das biegeschlaffe Material 9 wirkt, dieses ebenfalls gespannt wird. Dadurch kann ein besonders sicheres Koppeln des Fördergutbehälters 1 mit der Entladestation 5 erfolgen, wobei insbesondere die Auswerfebene 43 innerhalb des Fördergutbehälters 1 besonders sicher und gut hergestellt werden kann.

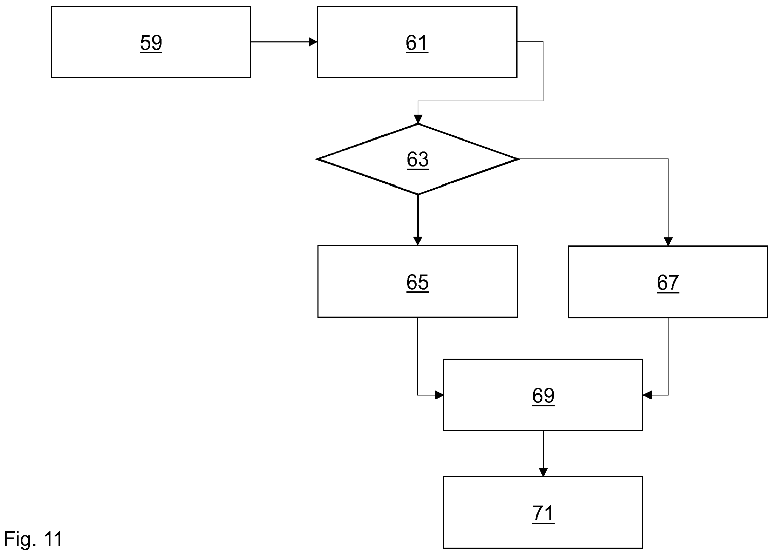

Figur 11 zeigt ein Ablaufdiagramm eines Verfahrens zum Entladen eines auf einem biegeschlaffen Material 9 eines Fördergutbehälters 1 aufgenommenen Förderguts 3 mittels einer Entladestation 5 eines Hängefördersystems 7. Ergänzend wird auf die Beschreibung der vorhergehenden Figuren 1 bis 10 Bezug genommen.

In dem Hängefördersystem 7 wird die Entladestation 5 bereitgestellt. Insbesondere wird die Entladevorrichtung 13, vorzugsweise mit der Plattform 31 bereitgestellt. Die Plattform 31 kann eine Entladefläche aufweisen.

In einem ersten Schritt 59 erfolgt ein aneinander Annähern des Fördergutbehälters 1 und der Entladestation 5. Dies kann beispielsweise durch Anheben der Entladevorrichtung 13 der Entladestation 5 erfolgen. Alternativ oder zusätzlich kann dies auch durch Einfahren des Fördergutbehälters 1 in die Entladestation 5 erfolgen. Vorzugsweise kommt es dabei bereits zu einer ersten Berührung des biegeschlaffen Materials 9 mit der Entladevorrichtung 13. Dabei kann bereits ein Verformen des biegeschlaffen Materials 9 und damit ein Anheben des Förderguts 3 erfolgen.

In einem zweiten Schritt 61 wird das biegeschlaffe Material 9 des Fördergutbehälters 1 mit der Entladestation 5 gekoppelt. Das Koppeln erfolgt wie vorab beschrieben mittels des Elektromagnets 29 und/oder der Vakuumgreifvorrichtung 21. Zum Koppeln wird zunächst der Energiefluss 15 eingeschaltet, sodass die Anziehungskraft, die die Haltekraft 17 bewirkt zwischen dem Fördergutbehälter 1 und der Entladestation 5 wirkt.

In einer optionalen Abfrage 63 wird entschieden, in welche Richtung die Entladevorrichtung 13, also die Plattform 31 der Entladestation 5 geneigt werden soll.

Entsprechend eines Ergebnisses der Abfrage 63 wird in einem dritten Schritt 65 die Plattform 31 der Entladevorrichtung 13 in eine erste Richtung geneigt und in einem fünften Schritt 67 wahlweise in eine entgegengesetzte zweite Richtung geneigt.

Durch das Neigen entsprechend des dritten Schritts 65 oder des vierten Schritts 67 wird das Auswerfgefälle in dem biegeschlaffen Material 9 gebildet und das Fördergut 3 aus dem Fördergutbehälter 1 ausgeworfen.

Sobald der Auswerfvorgang abgeschlossen und/oder vorzugsweise auch das Neigen zurückgenommen ist, erfolgt in einem fünften Schritt 69 das Abkoppeln des Fördergutbehälters 1 von der Entladestation 5. Dazu kann der Energiefluss 15 abgeschaltet werden. Ob das Fördergut ausgeworfen wurde, kann vorzugsweise mittels einer entsprechenden Überwachungsvorrichtung überwacht werden.

In einem sechsten Schritt 71 erfolgt ein Zurückstellen der Entladevorrichtung 13, also insbesondere der Plattform 31, sodass diese wieder in eine horizontale Lage gebracht werden kann. Der sechste Schritt 71 ist optional, wobei die Entladevorrichtung 13 vorzugsweise während des gesamten Verfahrens eine einheitliche Neigung aufweisen kann.

Optional erfolgt im gekoppelten Zustand, also insbesondere nach dem zweiten Schritt 61 zusätzlich ein Spannen des biegeschlaffen Materials 9.

### Bezugszeichenliste

- 1: Fördergutbehälter
- 3: Fördergut
- 5: Entladestation
- 7: Hängefördersystem
- 9: biegeschlaffes Material
- 11: Hängeträger
- 13: Entladevorrichtung
- 15: Energiefluss
- 17: Haltekraft
- 19: elektrische Energiequelle
- 21: Vakuumgreifvorrichtung
- 23: Kraftübertragungselement
- 25: Stoff
- 27: Koppelvorrichtung
- 29: Elektromagnet
- 31: Plattform
- 33: Spannvorrichtung
- 35: Rahmen
- 37: Fixierung
- 39: Abdeckmaterial
- 41: erster Pfeil
- 43: Auswerfebene
- 44: geschwungener Pfeil
- 45: Fahrtrichtung
- 46: Schwenkachse
- 47: Leitelement
- 48: Auswerfgefälle
- 49: Auffangbehälter
- 51: Vakuumpumpe
- 53: Steuerung
- 55: zweiter Pfeil
- 57: dritter Pfeil
- 59: erster Schritt
- 61: zweiter Schritt
- 63: Abfrage
- 65: dritter Schritt
- 67: vierter Schritt
- 69: fünfter Schritt
- 71: sechster Schritt

## Patentansprüche

1. Verfahren zum Beladen oder Entladen eines auf einem biegeschlaffen Material (9) eines Fördergutbehälters (1) aufgenommenen Förderguts (3) mittels einer Station wie einer Entladestation (5) und/oder einer Beladestation eines Hängefördersystems (7), **gekennzeichnet durch**:
- Bereitstellen der Station,
- Aneinander annähern des Fördergutbehälters (1) und der Station,
- Koppeln eines Bodens und/oder des biegeschlaffen Materials (9) des Fördergutbehälters (1) mit der Station durch eine von der Station aus wirkende Haltekraft (17) und/oder
- Neigen des an die Station gekoppelten biegeschlaffen Materials (9) und
- Auswerfen des Förderguts (3) aus dem Fördergutbehälter (1) in einer Gleitbewegung.

2. Verfahren nach Anspruch 1, **gekennzeichnet durch**:
- Spannen des gekoppelten biegeschlaffen Materials (9) mittels der Station durch Übertragen der Haltekraft (17) auf das biegeschlaffe Material (9).

3. Verfahren nach einem der Ansprüche 1 oder 2, **gekennzeichnet durch**:
- Erzeugen eines Energieflusses (15) mittels der Station, und dadurch
- Erzeugen der Haltekraft (17) als eine Anziehungskraft zwischen der Station und dem Fördergutbehälter (1),
- Koppeln des Fördergutbehälters (1) mit der Station mittels der Anziehungskraft,
- Abschalten des Energieflusses (15) zum Abkoppeln des Fördergutbehälters (1) von der Station.

4. Verfahren nach Anspruch 3, **gekennzeichnet durch**:
- Erzeugen des Energieflusses (15) zum Bestromen eines Elektromagnets (29) zum Erzeugen der Anziehungskraft als elektromagnetische Anziehungskraft.

5. Verfahren nach einem der Ansprüche 3 oder 4, **gekennzeichnet durch**:
- Erzeugen des Energieflusses (15) zum Evakuieren einer Vakuumgreifvorrichtung (21) zum Erzeugen der Anziehungskraft als pneumatische Anziehungskraft.

6. Fördergutbehälter (1) für ein Hängefördersystem (7) zum Transportieren von Fördergut (3), mit einem zweiseitig aufgehängten biegeschlaffen Material (9), in dem das Fördergut (3) für das Transportieren aufnehmbar ist, wobei der Fördergutbehälter (1) zum Laden mit einer Beladestation und/oder Entladestation (5) zusammenwirkt, **dadurch gekennzeichnet, dass** das biegeschlaffe Material (9) zumindest ein mit der Beladestation und/oder Entladestation (5) zum Übertragen einer von der Beladestation und/oder Entladestation (5) bewirkten Haltekraft (17) zusammenwirkendes Kraftübertragungselement (23) aufweist.

7. Fördergutbehälter nach Anspruch 6, **dadurch gekennzeichnet, dass** das Kraftübertragungselement (23) einen magnetischen Stoff (25) und/oder einen Magnet aufweist.

8. Fördergutbehälter nach einem der Ansprüche 6 oder 7, **dadurch gekennzeichnet, dass** das Kraftübertragungselement (23) in das biegeschlaffe Material (9) integriert, auf dieses aufgesetzt, geklammert, genietet und oder in dieses eingenäht ist.

9. Fördergutbehälter nach einem der Ansprüche 6 bis 8, **dadurch gekennzeichnet, dass** das Kraftübertragungselement (23) Zum Koppeln formschlüssig mit der Entladestation (5) zusammenwirkt.

10. Fördergutbehälter nach einem der Ansprüche 6 bis 9, **dadurch gekennzeichnet, dass** das Kraftübertragungselement (23) magnetische Fasern des biegeschlaffen Materials (9) aufweist.

11. Entladestation (5), die zum Entladen mit einem Fördergutbehälter (1) nach einem der Ansprüche 6 bis 10 zusammenwirkt, **gekennzeichnet durch**:
- Eine Entladevorrichtung (13), die zum Entladen des Fördergutbehälters (1) neigbar und/oder voreingestellt geneigt und/oder mittels der ein biegeschlaffes Material (9) des Fördergutbehälters (1) unmittelbar neigbar ist,
- Zumindest eine Koppelvorrichtung (27), mittels der eine von der Entladestation (5) ausgehende auf den Fördergutbehälter (1) wirkende Haltekraft (17) bewirkbar ist, wobei dadurch zum Entladen die Entladestation (5) mit dem biegeschlaffen Material (9) des Fördergutbehälters (1) koppelbar ist.

12. Entladestation nach Anspruch 11, **dadurch gekennzeichnet, dass** die Koppelvorrichtung (27) zumindest einen Elektromagnet aufweist.

13. Entladestation nach einem der Ansprüche 11 oder 12, **dadurch gekennzeichnet, dass** die Entladevorrichtung (13) eine Plattform (31) aufweist, die in zwei Richtungen abwärts zeigend neigbar ist und/oder eine Spannvorrichtung (33) zum Spannen des mittels der Koppelvorrichtung (27) gekoppelten biegeschlaffen Materials (9) aufweist und/oder zum Annähern an das biegeschlaffe Material (9) höhenverstellbar ist.

14. Entladestation nach einem der Ansprüche 11 bis 13, **dadurch gekennzeichnet, dass** die Koppelvorrichtung (27) eine Vakuumgreifvorrichtung (21) aufweist.

15. Hängefördersystem (7), **gekennzeichnet durch** einen Fördergutbehälter (1) nach einem der Ansprüche 6 bis 10 und/oder eine Entladestation (6) nach einem der Ansprüche 11 bis 14 und/oder eingerichtet, programmiert und/oder konstruiert zum Durchführen eines Verfahrens nach einem der Ansprüche 1 bis 5.
